# EUROPEAN PATENT SPECIFICATION

(11) **EP 2 338 770 B1**
(45) Date of publication and mention of the grant of the patent: **17.07.2013**
(21) Application number: 09425535.3
(22) Date of filing: 24.12.2009
(51) Int. Cl.: B62D 33/067

(54) **Device for the controlled tilting of driver's cabin of a vehicle**
Vorrichtung für die gesteuerte Kippung einer Fahrzeugesfahrerkabine
Dispositif pour le basculement contrôlé d'une cabine de conduit d'un véhicule

(43) Date of publication of application: 29.06.2011
(73) Proprietor: Iveco S.p.A., 10156 Torino (IT)
(72) Inventor: Stuerner, Johann, 89079 Ulm (DE); Prina, Claudio, 13900 Biella (IT); Bezze, Massimo, 10080 S. Benigno Canavese (IT); De Medici, Lorenzo, 25126 Brescia (IT)
(74) Representative: Borsano, Corrado

(56) References cited:
- US-A- 3 972 557
- US-A- 4 372 411
- US-A- 5 044 455

## Description

### Application field of the invention

The present invention relates to a device for the controlled tilting of a driver's cabin of a vehicle.

In particular, the invention is advantageously used for facilitating the controlled tilting of the driver's cabin, in order to allow the direct access to the engine compartment of a transport vehicle, such as, in non-limitative examples, a truck or similar used for commercial or industrial transport, or as a specialty vehicle such as a fire-fighting vehicle.

### Description of the prior art

In the field of commercial or industrial transport or of specialty vehicles, it is known in the art to use vehicles whose driver's cabin is placed over the engine compartment and is mounted so that it can be tilted, generally in a forward direction around a horizontal axis or pivot that is parallel to the front axle, in order to allow an easy and fast access to the engine, during the maintenance operations with the vehicle stationary. **An example of a known device for tilting a cabin of a vehicle is disclosed in** US4372411**.**

At present, the controlled tilting of the driver's cabin is performed by means of one or two hydraulic cylinders, which are usually fixed, by one end, to a side point of the bottom of the driver's cabin, and, by the opposite end, to the vehicle frame, in order to cause the cabin tilting by rotating it up to a predetermined limit angle of elevation which corresponds to the maximum allowed tilting. The cylinders may be manually operated or, preferably, they may be operated by means of an appropriate electric motor.

The dimensions of such cylinders must necessarily be such that they can bear the weight, that is usually high, of the driver's cabin.

Moreover, it is necessary that the driver's cabin is reinforced in correspondence of the point where the cylinder is fixed, in order to bear the thrust forces exerted by the cylinder itself, and the dynamic stress drop, which contributes to a further increase the weight of the cabin itself, and which often provokes structural twists of the cabin, especially on the side where the cylinder is present, when it is the only one.

### Summary of the invention

The aim of the present invention is therefore to overcome the drawbacks of the prior art described above.

In particular, the object of the present invention is to provide a device suitable for tilting the driver's cabin of a transport vehicle, which is light and easily applicable to the solutions known in the art.

A further aim of the present invention is to provide a device which facilitates the tilting of the driver's cabin of a transport vehicle by means of a double dynamic action up to the maximum angle of elevation.

According to the present invention a device for tilting the driver's cabin of a transport vehicle is realized, of the type comprising actuator means acting on said cabin in order to allow the rotation of the cabin itself around a horizontal axis; the device being **characterized in that** said actuator means comprise toothed gear means associated to motor means in order to engage with rack means fixed to the cabin itself.

The subject of this invention is in particular a device for the controlled tilting of the driver's cabin of a vehicle, and respective vehicle, as described more fully in the claims, which are an integral part of this description.

### Brief description of the Figures

The technical details and the advantages of the invention, according to the purposes mentioned above, will become more clear from the following detailed description given with reference to the figures attached hereto in which a preferred but non-limitative embodiment of the device, together with alternative embodiments, are shown, in which:
- figure 1 is a schematic view, with some parts removed for the sake of clarity, of a preferred embodiment of the device according to the invention applied to a driver's cabin of a transport vehicle, with an enlarged view of an alternative embodiment of the activation system of the tilting device;
- figure 2 shows a diagram of the forces developed during the tilting of the cabin, and an enlarged view of the pivot around which the cabin rotates.

In the drawings the same reference numbers and letters identify the same elements or components.

### Detailed description of preferred embodiments of the invention

With reference to the attached figures, D generally indicates a device suitable for determining the controlled tilting of a driver's cabin C of a transport vehicle, in order to allow, for example, the access to the engine compartment (known in the art and not shown) that is placed underneath.

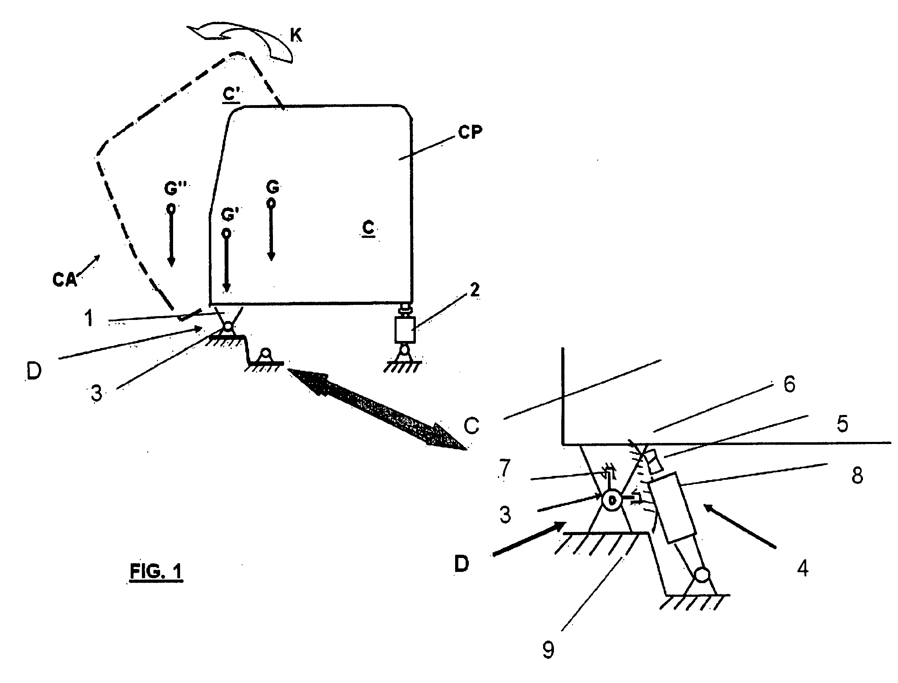

According to what is shown in figure 1, the cabin C, starting from its normal position (indicated by a continuous line) with the rear part CP being fixed to and resting on a retainer 2, can be tilted around a horizontal axis or pivot 3, mounted on an appropriate support 1 in correspondence of the front part CA of the cabin C itself, under the thrust of actuator means which are part of the device D and which are schematically indicated by 4 in the enlarged view of figure 1. The actuator means 4 are preferably activated by means of remote control means (known in the art and not shown).

According to what is shown in figure 1, the actuator means 4 are suitable to act on the cabin C in correspondence of the bottom of the cabin C itself, and comprise in detail a gear wheel 5, preferably a helical gear 5, which is suitable for meshing with a semicircular toothed rack section, under the thrust of an motor 8, preferably an electric motor.

The gear wheel 5 is an integral part of the motor 8. The rack 6 is preferably part of the pivot point 3.

In a further alternative embodiment, a planetary gear is added to the head of the motor 8, being preferably of the high speed reduction type. Thus it is possible to mount the motor 8 so that it is coaxial with the rotation point 3.

In this case the electric motor with the planetary gear will be coaxial with the rotation point 3 of the cabin. The motor 4 is fixed on frame elements 9 in order to provide the tilting torque by means of the planetary gear, which acts on the rotation point 3 on the support 1 of the cabin.

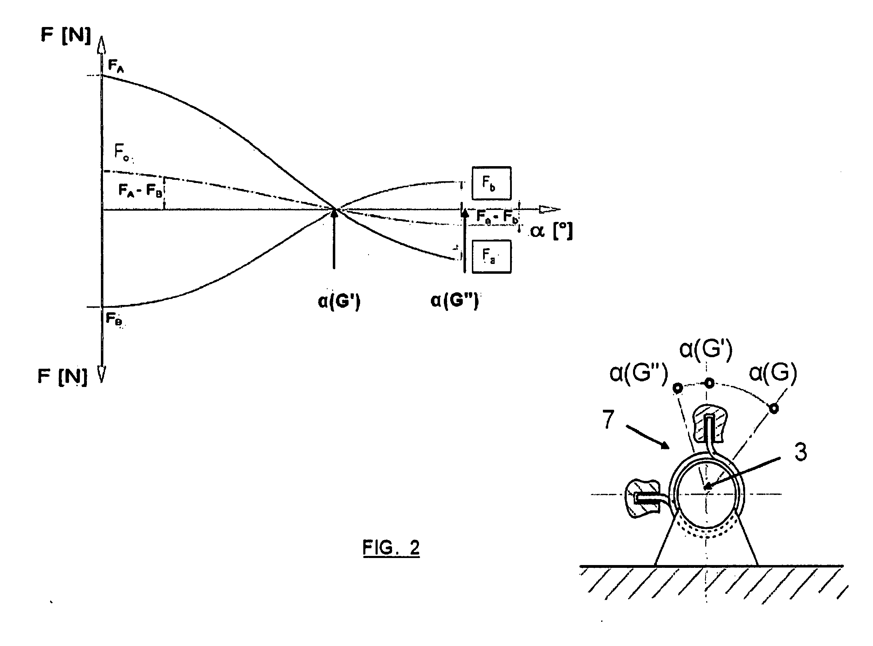

The device D further comprises (fig. 2) spring elastic means 7 acting and disposed on the mentioned pivot 3 and suitable for facilitating the tilting of the cabin C which is performed by means of the aforementioned actuators 4 around the horizontal pivot 3 itself.

Specifically, the elastic means 7 are appropriately loaded so that they can assist the thrust of the actuators 4 (with the gear wheel 5 winding in one direction on the rack section 6 and moving it up leftwards - figure 1) for the forward tilting of the cabin C, namely by facilitating the counterclockwise rotation shown in figure 1 (arrow K) of a barycenter point G of the cabin itself in order to reach the neutral position G', in which the cabin C is in a position C' of unstable equilibrium (indicated by a dotted line in figure 1), having G' vertically aligned with the pivot 3.

In addition to such position of equilibrium and up to the limit angle of elevation, namely in a point G" in addition to G', during the rotation according to the sense of the arrow K, the elastic means 7 are suitable to oppose to a further rotation of the cabin C, assisting the restraining action performed by the actuators 4.

With reference to figure 2, FA indicates the trend of the overall force to be exerted for tilting the cabin as a function of the tilting angle α. As it can be seen, when α = 0 (cabin at rest) the force to be exerted is maximum. Then the force decreases up to the value 0 for α = α(G') in the point of unstable equilibrium, after that it inverts the direction for angles α > α(G'), up to the maximum tilting at the value **Fₐ** corresponding to the angle α = α(G"). An equivalent representation can be seen in figure 2 showing an enlarged view of the pivot point 3. On the other hand, FB indicates the force trend of the spring elastic means 7, which is equivalent to FA but has the opposite sign. The way the elastic means 7 are loaded has to be pointed out. In the cabin neutral position α(G'), the force F_{B} has value zero and it is loaded in a direction up to the maximum value F_{B} when the cabin goes down in the position at rest for α = α(G), while it is loaded in the opposite direction up to the value F_{b} when the cabin is in the tilted position for an angle α = α (G"). Such loading occurs without any need for external energy, being determined just by the cabin's weight. In absolute value, FA > FB, therefore for tilting the cabin it is necessary to apply a further force contribution F_{c} by the actuator means 4, whose value must be higher than the difference FA - FB.

As a matter of fact, the position at rest of the spring elastic means 7 may advantageously correspond to the position of unstable equilibrium of the cabin.

According to what is shown in the enlarged view of figure 1, the elastic means 7 preferably comprise, but are not limited to, a leaf spring 7 of the folded single-leaf type. According to further alternative embodiments, the spring means 7 may comprise a leaf spring of the folded multi-leaf type, or a helical spring, or a torsion bar spring.

In all the possible alternative embodiments, the person skilled in the art is able to choose the type and the dimensions of the spring.

By introducing both the gear wheel 5 suitable for winding/unwinding around the rack section 6 under the thrust of the motor 8, and the elastic means 7 acting and disposed on the pivot 3, the device D according to the invention generates the following advantages:
- recovery of the energy deriving from the weight of the cabin C,
- replacement of the hydraulic cylinder used in the solutions of the prior art with more efficient and lighter means,
- reduction of the overall weight of the cabin C, by reducing fixing and reinforcement elements on the connection point of the actuator;
- easier and faster tilting and repositioning of the driver's cabin C in its normal position.

## Claims

1. Device (D) for the controlled tilting of the driver's cabin (C) of a transport vehicle, of the type comprising actuator means (4) acting on said cabin (C) in order to allow the rotation of the cabin (C) itself around a pivot (3), **characterized in that** said actuator means (4) comprises:
- an electric motor (8);
- gear means (5) which are an integral part of said electric motor;
- rack means (6) which are part of said pivot (3),
and wherein said gear means (5) are suitable to mesh said rack means under the thrust of said electrical motor (8).

2. Device according to claim 1, wherein said gear means (5) comprise a helical gear wheel (5) and wherein said rack means (6) comprises a semicircular toothed rack section (6).

3. Device according to claim 1, comprising a planetary gear at the head of said motor means (8), preferably of the high speed reduction type, said motor means (8) being coaxial with said axis (3).

4. Device according to any of the previous claim, wherein elastic means (7) are suitable to act on said axis (3) in order to facilitate said tilting in combination with said actuator means (4).

5. Device according to claim 4, wherein said elastic means (7) comprise a leaf spring with at least a single leaf, or helical spring means, or torsion bar spring means.

6. Transport vehicle, in particular for commercial or industrial transport, or specialty vehicle, **characterized in that** it comprises a device for tilting the driver's cabin according to one or more of the previous claims.

## Patentansprüche

1. Vorrichtung für die gesteuerte Kippung einer Fahrerkabine eines Transportfahrzeuges der Bauart, die Betätigungsmittel (4) aufweisen, die auf die Kabine (C) wirken, um der Kabine (C) ihre Drehung um ein Gelenk (3) zu ermöglichen, **dadurch gekennzeichnet, dass** die Betätigungsmittel (4) aufweisen:
- einen Elektromotor (8);
- Getriebemittel (5), die ein integraler Bestandteil des Elektromotors 5 sind;
- Zahnstangenmittel (6), welche Teil des Gelenks (3) sind,
wobei die Getriebemittel (5) geeignet sind, mit den Zahnstangenmitteln während des Antriebs durch den Elektromotor (8) zu kämmen.

2. Vorrichtung nach Anspruch 1, bei dem die Getriebemittel (5) ein schraubenförmiges Zahnrad (5) und die Zahnstangenmittel (6) einen halbkreisförmigen verzahnten Zahnstangenbereich (6) aufweisen.

3. Vorrichtung nach Anspruch 1, die ein Planetengetriebe, bevorzugt der geschwindigkeitsreduzierenden Bauart, am Kopfende der Motormittel (8) aufweist, wobei die Motormittel (8) koaxial mit der Achse (3) sind.

4. Vorrichtung nach einem der vorangegangenen Ansprüche, bei der elastische Mittel (7) geeignet sind auf die Achse (3) zu wirken, um die Kippung in Verbindung mit den Betätigungsmitteln (4) zu vereinfachen.

5. Vorrichtung nach Anspruch 4, bei der die elastischen Mittel (7) eine Blattfeder mit zumindest einem Blatt oder eine Schraubenfeder oder einen Torsionsfederstab aufweisen.

6. Transportfahrzeug, insbesondere für kommerziellen oder industriellen Transport oder ein Spezialfahrzeug, **dadurch gekennzeichnet, dass** es eine Vorrichtung für die Kippung der Fahrerkabine nach einem oder mehreren der vorgenannten Ansprüche aufweist.

## Revendications

1. Dispositif (D) pour commander l'inclinaison d'une cabine de conducteur (C) d'un véhicule de transport, du type comprenant des moyens formant actionneur (4) agissant sur ladite cabine (C) afin de permettre la rotation de la cabine (C) elle-même autour d'un pivot (3), **caractérisé en ce que** lesdits moyens formant actionneur (4) comprennent :
- un moteur électrique (8) ;
- des moyens formant pignon (5) qui font partie intégrante dudit moteur électrique ;
- des moyens formant crémaillère (6) qui sont une partie dudit pivot (3),
et dans lequel lesdits moyens formant pignon (5) sont appropriés pour engrener avec lesdits moyens formant crémaillère sous la poussée dudit moteur électrique (8).

2. Dispositif selon la revendication 1, dans lequel lesdits moyens formant pignon (5) comprennent un pignon hélicoïdal (5), et dans lequel lesdits moyens formant crémaillère (6) comprennent une section de crémaillère dentée semi-circulaire (6).

3. Dispositif selon la revendication 1, comprenant un satellite en tête desdits moyens formant moteur (8), de préférence du type à grande réduction de vitesse, lesdits moyens formant moteur (8) étant coaxiaux avec ledit axe (3).

4. Dispositif selon l'une quelconque des revendications précédentes, dans lequel des moyens élastiques (7) sont appropriés pour agir sur ledit axe (3) afin de faciliter ladite inclinaison en combinaison avec lesdits moyens formant actionneur (4).

5. Dispositif selon la revendication 4, dans lequel lesdits moyens élastiques (7) comprennent un ressort à lames avec au moins une lame unique, ou des moyens formant ressort hélicoïdal, ou des moyens formant ressort à barre de torsion.

6. Véhicule de transport, en particulier pour un transport commercial ou industriel, ou véhicule spécialisé, **caractérisé en ce qu'**il comprend un dispositif pour incliner la cabine du conducteur selon une ou plusieurs des revendications précédentes.
